# FASCICULE DE BREVET EUROPEEN

(11) **EP 0 550 329 B1**
(45) Date de publication et mention de la délivrance du brevet: **12.02.1997**
(21) Numéro de dépôt: 92403533.0
(22) Date de dépôt: 22.12.1992
(51) Int. Cl.: H04L 29/06

(54) **Procédé pour vérifier la conformité à une norme d'une cellule représentative d'un circuit dédié à la gestion d'un protocole de communication, et système pour sa mise en oeuvre**
Verfahren und Anordnung zur Prüfung der Normanpassung einer Zelle, eine Schaltung zur Übertragungsprotokollverwaltung darstellend
Method for conformance testing of a cell representative of a circuit for managing a communication protocol, and system to apply the method

(30) Priorité: 27.12.1991 FR 9116235
(43) Date de publication de la demande: 07.07.1993
(73) Titulaire: SGS-THOMSON MICROELECTRONICS S.A., 94253 Gentilly Cédex (FR)
(72) Inventeur: LE VAN SUU, Maurice, 93230 Romainville (FR)
(74) Mandataire: Schmit, Christian Norbert Marie

(56) Documents cités:
- IEEE SPECTRUM Mars 1984, NEW YORK US pages 28 - 34 P.WALLICH 'ON THE HORIZON: FAST CHIPS QUICKLY'
- IFIP WORKSHOP ON PROTOCOLS FOR HIGH-SPEED NETWORKS 1989, Z]RICH, CH pages 181 - 195 H.ABU-AMARA ET AL 'PSI: A SILICON COMPILER FOR VERY FAST PROTOCOL PROCESSING'
- ELECTRONIC DESIGN. Octobre 1984, HASBROUCK HEIGHTS, NEW JERSEY pages 167 - 181 S.C.JOHNSON 'SILICON COMPILER LETS SYSTEM MAKERS DESIGN THEIR OWN CHIPS'
- IEEE TRANSACTIONS ON SOFTWARE ENGINEERING. vol. SE-13, no. 9, Septembre 1987, NEW YORK US pages 989 - 999 G.V.BOCHMANN ET AL 'SEMIAUTOMATIC IMPLEMENTATION OF COMMUNICATION PROTOCOLS'

## Description

La présente invention concerne un procédé pour vérifier la conformité à une norme d'une cellule représentative d'un circuit dédié à la gestion d'un protocole de communication.

Elle vise également un système mettant en oeuvre ce procédé.

Le développement considérable des techniques de communication a été judicieusement accompagné de la mise au point de normes qui doivent être respectées par tout fabricant d'équipements et de composants de communication.

Jusqu'à présent, il est d'usage de vérifier si un équipement fini est conforme à une norme prédéterminée à l'issue de sa fabrication, en utilisant un équipement modèle de simulation de référence d'un réseau de communication.

Cette pratique impose à chaque équipementier de consacrer un effort important de développement uniquement pour garantir le respect de la norme associée au protocole de communication mis en oeuvre, alors que la conformité à la norme ne représente bien sûr qu'un aspect, certes indispensable, des nombreuses fonctions requises des équipements de communication.

Une solution proposée consiste à ne porter cet effort que sur un ou plusieurs composants spécialisés dédiés à la gestion de protocoles de communication. Cependant, alors que le coût de revient des équipements électroniques tend constamment à baisser, il n'est plus envisageable dans bien des cas de prévoir des circuits spécialisés de communication.

D'autres solutions au problème de la vérification de la conformité de composants à une norme sont également proposées aux équipementiers, telles que celle consistant à "remodeler" le composant soumis à test pour en optimiser la conception en terme de coût et de performance, ou encore à retravailler le logiciel à l'origine de la conception du composant en question.

En outre, au moment de la qualification d'un produit fini pour une ou plusieurs applications données, les équipementiers n'ont pas toujours la certitude d'être en exacte conformité avec la norme prescrite, notamment lorsqu'ils ne disposent pas de suffisamment de temps pour tester dans de bonnes conditions ces produits.

Le but de l'invention est de remédier à cet inconvénient en proposant un procédé pour vérifier la conformité à une norme prédéterminée d'une cellule représentative d'un circuit dédié à la gestion d'un protocole de communication, ladite cellule ayant été préalablement optimisée pour une application donnée.

Suivant l'invention, le procédé comprend:
- une première étape pour dupliquer ladite cellule en vue de générer plusieurs cellules dupliquées identiques à ladite cellule ;
- une seconde étape pour connecter lesdites cellules dupliquées à un bus de réseau ;
- une troisième étape pour configurer chaque cellule dupliquée selon des définitions contenues dans ladite norme, de sorte que l'ensemble desdites cellules configurées soit représentatif de conditions réelles de fonctionnement du circuit conçu ; et
- une quatrième étape pour appliquer sur le bus de réseau des signaux représentatifs de trames conformes à ladite norme et des signaux anormaux ou parasites, et pour recueillir en retour pour analyse les réponses respectives de chacune desdites cellules configurées.

Ainsi, avec le procédé selon l'invention, la vérification de la conformité est assurée en amont de la fabrication des produits et composants, au stade de leur conception et de leur fabrication. Le procédé selon l'invention permet de déterminer et de prédire le comportement d'un composant bien avant son intégration et son insertion au sein d'une carte électronique. Il permet également de réduire le temps de conception et d'optimiser un composant sans risque de s'écarter de la norme prescrite.

En outre, on obtient avec le procédé selon l'invention un gain de temps et d'argent dans le test du produit fini. En effet, si un problème éventuel est détecté par la mise en oeuvre du procédé selon l'invention, une action corrective est effectuée à la source de la conception, ce qui évite de reprendre le produit fini. L'impact de ces actions correctives sur l'investissement de développement d'un produit nouveau reste alors très faible, sinon parfois insignifiant.

Dans une forme de réalisation avantageuse de l'invention, la cellule testée a été obtenue par modification d'une cellule initiale décrite à un très haut niveau de description.

Ainsi, la vérification de conformité peut concerner autant des cellules conçues sur des bases de description logique combinatoire et séquentielle classiques mais également des cellules conçues en utilisant une approche descriptive de haut niveau, notamment de type VHDL.

Le document IEEE SPECTRUM, publié en Mars 1984, New York US, WALLICH: "On the horizon: fast chips quickly", divulgue des méthodes et système de conception de circuit utilisant ce type d'approche mais les méthodes de test restent limitées à celles couramment utilisées dans ces dispositifs de conception, sans une approche globale de vérification de conformité d'un circuit à la gestion d'un protocole de communication.

Suivant un autre aspect de l'invention, le système pour vérifier la conformité à une norme prédéterminée d'une cellule représentative d'un circuit dédié à la gestion d'un protocole de communication, ladite cellule ayant été préalablement optimisée pour une application donnée, mettant en oeuvre le procédé selon l'invention, comprenant des moyens pour traiter des cellules représentatives de circuits, est caractérisé en ce que ces moyens de traitement sont agencés pour dupliquer ladite cellule et générer plusieurs cellules dupliquées identiques à ladite cellule, et comprennent des moyens pour connecter lesdites cellules dupliquées à un bus de réseau, des moyens pour configurer chaque cellule dupliquée selon des définitions contenues dans ladite norme de sorte que l'ensemble desdites cellules configurées soit sensiblement représentatif de conditions réelles de fonctionnement du circuit à vérifier, et des moyens pour générer des signaux sur le bus de réseau.

D'autres particularités et avantages de l'invention apparaîtront encore dans la description ci-après. Aux dessins annexés donnés à titre d'exemples non limitatifs:
- la figure 1 est un diagramme illustrant les phases principales d'un processus d'élaboration de circuits dédiés tel que mis en oeuvre dans l'art antérieur;
- la figure 2 est un diagramme synoptique illustrant les étapes principales du procédé selon l'invention;
- la figure 3 illustre plus particulièrement un exemple de mise en oeuvre du procédé selon l'invention;
- la figure 4 rassemble des chronogrammes de signaux de trame respectivement issus de deux cellules et d'un bus.
- la figure 5 montre la structure interne simplifiée d'un circuit gestionnaire de protocole pour lequel le procédé selon l'invention peut être mis en oeuvre.

On va tout d'abord rappeler quelques éléments essentiels de l'art antérieur afin de mieux comprendre l'invention.

Les étapes classiques de conception sont :
- l'utilisation d'un outil de développement de circuit ;
- le placement et le routage du circuit ;
- la génération des masques ;
- la fabrication du circuit et/ou de prototypes ;
- la production.

Les fonctions essentielles d'un outil de développement peuvent être sommairement décomposées en :
1/ une description du composant à développer à un très haut niveau (VHDL) ;
2/ une compilation prenant en compte la technologie ;
3/ une génération symbolique du circuit mettant en oeuvre une bibliothèque de cellules ;
4/ une fourniture d'un schéma symbolique représentatif du circuit et de sa fonction.

Le procédé selon l'invention peut être mis en oeuvre lors de l'une quelconque de ces étapes, et de toute façon avant l'étape de fabrication.

La demande de brevet français FR-A- 2 681 748 déposée le 20 Septembre 1991 au nom du présent déposant divulgue un procédé pour concevoir des circuits intégrés contrôleurs de protocole, qui met en oeuvre une description de type VHDL et inclut les étapes précitées. Ce procédé est particulièrement adapté au contrôle de protocoles de communication selon la norme VAN.

On rappelle que:
- VHDL signifie "Very High Description Level" : Très Haut Niveau de Description.
- VAN signifie "Vehicle Area Network" : Réseau d'Environnement Automobile.

Lors de la conception d'un circuit dédié à des fonctions de communication, il s'agit de combiner une fonction de protocole et une ou plusieurs fonctions d'application pour aboutir au produit fini. Il existe bien sûr des interactions entre protocole de communication et applications et l'équipementier vise généralement à obtenir la plus grande intersection entre la fonction de protocole et les fonctions applicatives.

En général, un composant incluant une fonction de protocole de communication couvre les couches suivantes de la norme internationale ISO, connue de l'homme de métier :
- une demi-couche physique de la première couche de la norme-ISO,à savoir n'incluant pas-l'amplificateur de bus ;
- une couche LLC ("Level Logic Control") et une couche MAC, ("Medium Access Control") et d'autres couches visant notamment le routage et l'application.

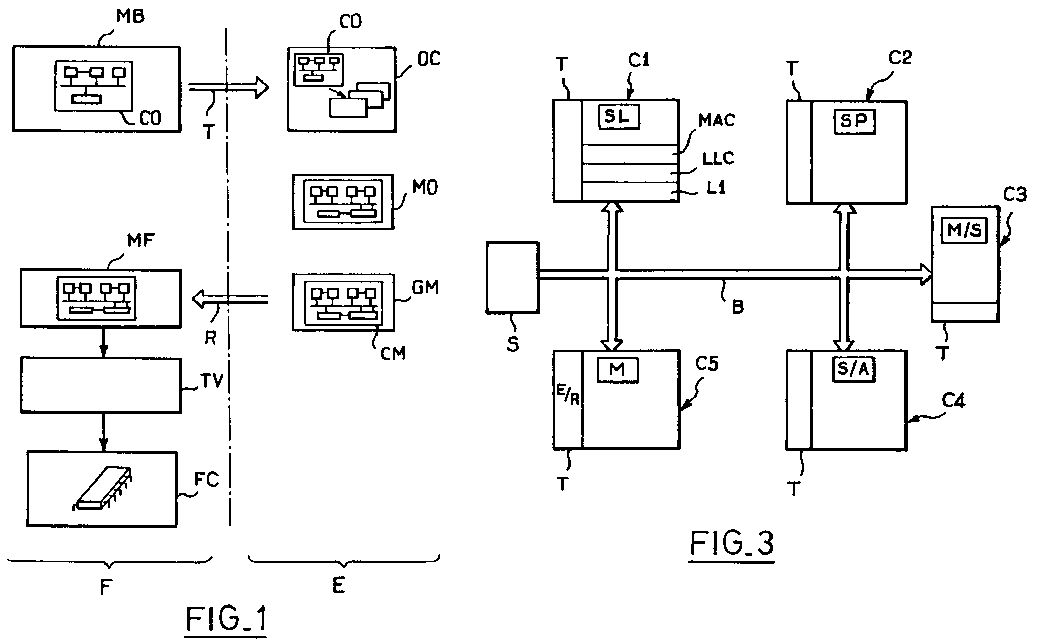

On va maintenant décrire les différentes étapes du processus d'élaboration de circuits dans lequel est mis en oeuvre le procédé selon l'invention, en référence à la figure 1.

Un modèle VHDL de base comprend généralement un noyau contenant le protocole, une première et une seconde couches optionnelles, comme cela est divulgué dans le demande de brevet français précitée.

Le modèle initial développé chez le fabricant de circuit, et qui a été par exemple décrit au niveau VHDL (indiqué par MB en figure 1) est transféré (étape T) dans sa totalité au client équipementier sur un support approprié, par exemple une bande magnétique.

Ce client dispose sur son site d'un outil de conception OC au moyen duquel celui-ci modifie (étape MO) le modèle fourni en fonction de ses besoins et applications spécifiques. Il génère ainsi un nouveau modèle VHDL (étape GM).L'ensemble des opérations effectuées par le client équipementier sera indiqué par la suite phase E.

Ce modèle résultant est transféré (étape R) chez le fabricant de circuit intégré. Le modèle résultant est alors mis en forme (étape MF), testé et vérifié (étape TV) selon une norme prédéterminée, par exemple, la norme VAN. A l'issue de ces différentes étapes, le circuit est enfin fabriqué (étape FC) selon des procédés connus. On indiquera dans la suite par la référence F l'ensemble des opérations effectuées chez le fabricant de circuits intégrés.

Afin de mieux comprendre les possibilités offertes par le procédé selon l'invention, il est nécessaire d'indiquer la nature des simulations effectuées jusqu'à présent dans l'art antérieur. Ces simulations consistent à "injecter" aux entrées d'un modèle numérique du circuit en cours de conception des signaux appropriés, appelés stimuli d'entrée, pour exciter ce circuit et analyser son comportement. Les résultats de ces simulations sont obtenus sur différents supports, notamment papier, ou bande magnétique et/ou peuvent être stockés dans l'outil de conception informatique.

Des stimuli de vérification peuvent à titre d'exemple viser :
- les vitesses de transmission ;
- le bon comportement du circuit selon le type de codage ;
- la bonne conception des parties de codage et de décodage ;
- les systèmes de synchronisation et/ou de resynchronisation ;
- le mécanisme de reconnaissance d'adresse et de masquage ;
- le mécanisme de reconnaissance des symboles dans la trame ;
- le calculateur de code correcteur d'erreur ;
- la partie acquittement de la trame ;
- la partie d'interface avec le microprocesseur ou microcontrôleur ;
- la partie gestion de perte d'arbitrage et de collision sur le bus ;
- la partie d'accès mémoire du circuit en lecture ou en écriture ;
- la partie remise à zéro du circuit par action matérielle ou logicielle ; et
- la partie applicative du client (réaction du circuit en fonction du message reçu).

Dans l'art antérieur, chacun des blocs fonctionnels précités est étudié et testé de façon décorrélée et réagit aux stimuli qui lui sont destinés indépendamment des autres blocs ; il s'ensuit que l'interaction éventuelle entre plusieurs blocs fonctionnels ne peut réellement être testée en terme de conformité à une norme qu'à l'issue de la réalisation effective du circuit.

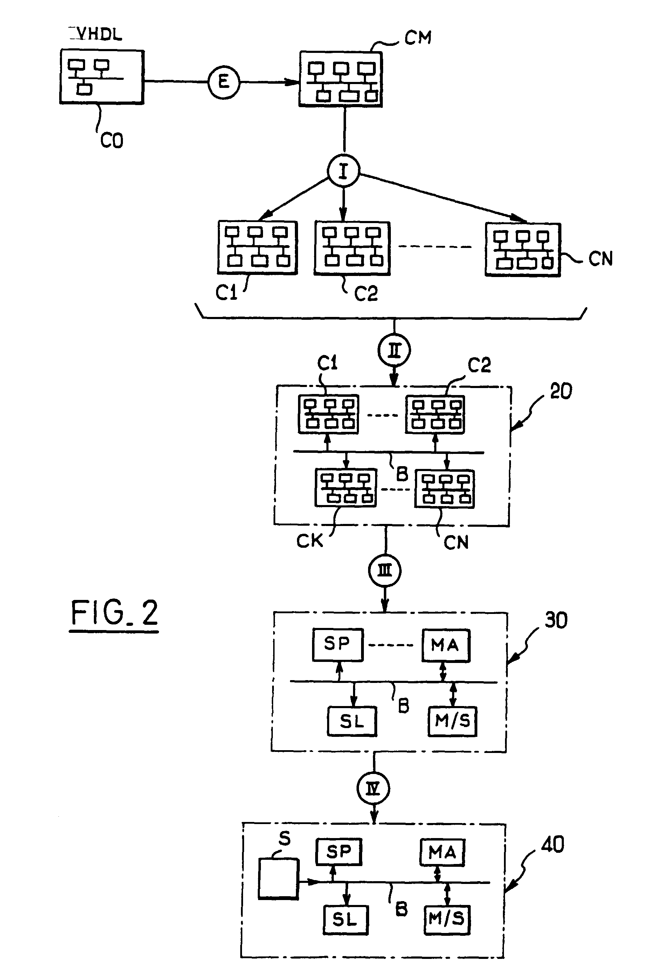

On va maintenant décrire de façon détaillée le procédé selon l'invention, en référence à la figure 2.

Ce procédé peut être mis en oeuvre au stade de l'étape TV précitée de test et de vérification, en référence à la figure 1. A ce stade, un circuit CM a été conçu et modifié (phase E) par le client équipementier en fonction de ses besoins spécifiques à partir d'un modèle original CO décrit par exemple à un niveau VHDL et fourni par le fabricant; il est à noter que ce circuit CM peut fort bien avoir subi préalablement certaines des vérifications précitées. Il est disponible pour test sous la forme d'une cellule logicielle image d'une structure matérielle et qui sera dans la suite de cette description dénommée cellule modifiée.

La première étape I du procédé selon l'invention consiste à générer à partir de la cellule modifiée CM plusieurs cellules identiques C1, C2,...CN par duplication.

La deuxième étape II vise la connexion de ces différentes cellules C1, C2,..CN sur un bus B numérique, qui peut être éventuellement multiplexé, et représentatif de l'environnement final de l'application à laquelle le circuit testé est destiné. Cette connexion fournit une structure logicielle de test 20.

Au cours de la troisième étape III du procédé selon l'invention, chaque cellule issue de la duplication est configurée selon la définition de la norme de communication choisie, par exemple, la norme VAN précitée.

A titre d'exemple dans le cas de cette norme, une cellule peut être configurée dans un mode-dit Espion (SP), tandis que d'autres cellules peuvent être configurées dans d'autres modes tels que :
- Maître/Esclave (M/S) ;
- Esclave (SL) ;
- Maître (MA) ;
- Esclave avec acquittement ;
- Esclave sans acquittement.

L'ensemble de ces modes correspond aux différentes définitions contenues dans la norme, chaque mode de configuration correspondant à un des états fonctionnels attendus du circuit final.

A l'issue de cette étape de configuration, on dispose d'une structure configurée de réseau 30, se rapprochant au mieux de l'environnement représentatif de l'application finale.

La quatrième étape IV consiste en la connexion d'un système brouilleur S sur le bus B qui a pour fonction de générer des parasites et stimuli les plus représentatifs possibles des situations pouvant être rencontrées sur le réseau de communication. On peut alors analyser dans chaque cellule et sur le bus tous les signaux émis et reçus et vérifier ainsi leur conformité à la norme visée selon des techniques d'analyse actuelles.

Ainsi, le brouilleur S doit être adapté pour injecter sur le bus B des trames telles que :
- une trame normale selon la norme suivie ;
- une trame avec variation de vitesse de débit d'informations sur le bus ;
- une trame normale et/ou une trame avec variation de vitesse de débit et/ou des parasites aléatoires ou prédéterminés sur le bus en cours d'émission ou de réception.

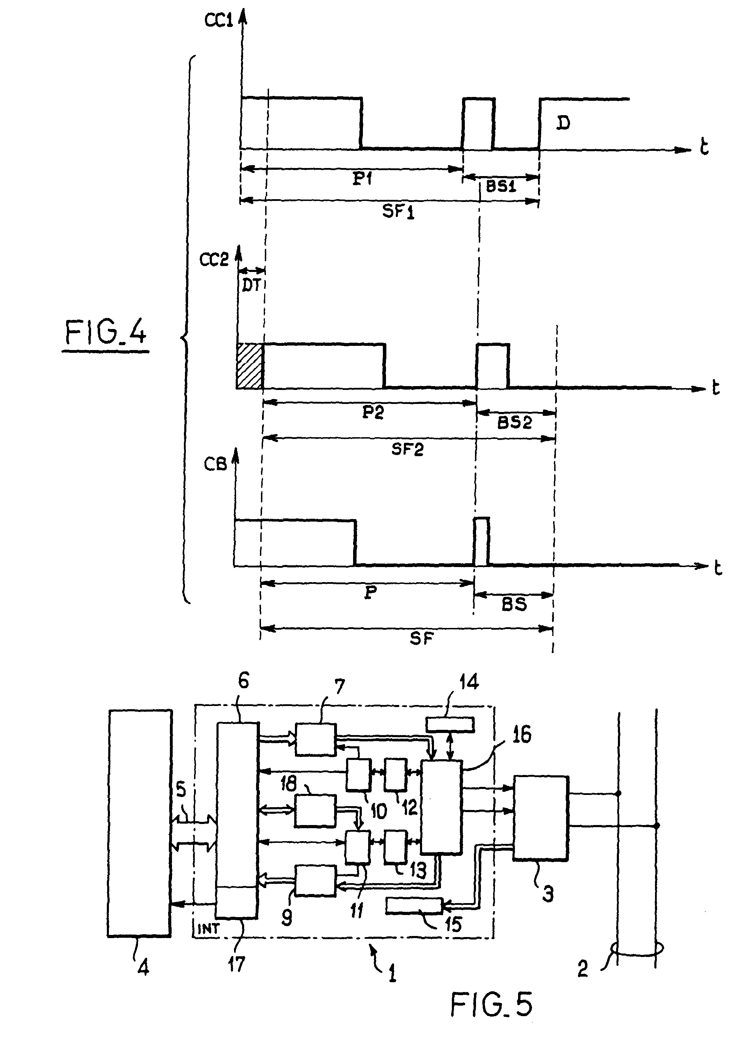

La figure 3 illustre un exemple de structure de test de conformité à la norme VAN obtenue avec le procédé selon l'invention, à l'issue de l'étape IV précitée. Cinq cellules C1-C5 ont été obtenues par duplication puis configurées chacune de façon différente. Ainsi, une première cellule C1 est configurée en mode esclave SL et intègre des couches L1, LLC et MAC. Une seconde couche C2 est configurée en mode Espion SP, une troisième couche en mode Maître/Esclave M/S, une quatrième couche C4 en mode Esclave S/A avec réponse dans la trame et une cinquième couche C5 en mode Maitre M avec une structure ou motif de trame T adaptée en émission/réception. Les quatre autres cellules sont également dotées d'un motif de trame T.

Lors de la configuration des cellules dupliquées, des adresses et des vitesses de transmission différentes peuvent être affectées à chacune de ces cellules. Il est également possible de vérifier les blocs de codage et décodage de bits, l'encapsulation d'une trame, sa décapsulation, la vitesse de transmission du calculateur du CRC, l'accès des interfaces entre microprocesseur et/ou microcontrôleur, l'accès mémoire du circuit, la mise à zéro du circuit (matérielle et logicielle), pendant, avant et/ou après une émission ou une réception d'une trame dans un environnement de réseau le plus représentatif de conditions effectives de communication (signaux normaux, anormaux, parasité ou non).

En outre, le procédé selon l'invention permet également d'observer simultanément le comportement du circuit conçu dans plusieurs situations différentes, ce qui est très difficilement réalisable dans le contexte d'un test avant fabrication dans l'art antérieur. On peut ainsi étudier le dialogue, par exemple, de la cellule C1 avec la cellule C4 en même temps que la réception par la cellule C1 d'informations de contrôle des autres cellules par le simple jeu de la configuration des trames et adresses internes desdites cellules.

De plus, le procédé selon l'invention permet de mettre en évidence le fonctionnement des blocs d'arbitrage ou de collision et la vérification de la notion de priorité en fonction de la configuration de chaque cellule (adresses de cellule émettrice prioritaire, méthode du jeton, etc.) Il suffit en effet d'émettre une trame à partir du brouilleur S ou de définir lors de l'étape de configuration III, la possibilité pour deux cellules d'émettre simultanément sur le réseau avec un décalage temporel de la décision de prise de ligne. On peut également provoquer cette situation en injectant des signaux parasites de désynchronisation ou de collision de bit.

A titre d'exemple, une déformation du préambule d'une trame peut être détectée sur le bus de réseau avec le procédé selon l'invention, comme l'illustre la figure 4.

On considère deux cellules C1 et C2 émettant chacune sur le bus B deux signaux de trame décalés d'une durée DT et comprenant chacun un préambule P1, P2 et un bit de début BS1, BS2, le préambule et le bit de début constituant un signal de début de trame SF1, SF2 dont les chronogrammes CC1 et CC2 sont représentés en figure 4. Le signal résultant (chronogramme CB) sur le bus B, obtenu par la mise en oeuvre du procédé selon l'invention, présente un préambule P, un bit de début BS et un signal de début de trame SF erronés. Une telle non conformité ne pourrait être détectée avec les tests pratiqués dans l'art antérieur. A ce stade de détection de non conformité, il est possible d'agir en amont sur la conception du circuit pour en corriger les défauts.

A titre d'exemple, le procédé selon l'invention peut être appliqué à une famille de circuits dédiés à des applications automobiles et configurés pour gérer des communications selon une norme prédéterminée telle que la norme VAN connue de l'homme de métier.

Ainsi, on peut citer un contrôleur de communication de données en technologie CMOS qui assure une fonction de gestionnaire de protocole. La figure 5 représente la structure interne d'un tel circuit comprenant un module gestionnaire de protocole pour le test duquel peut être appliqué le procédé selon l'invention.

le processus d'accès est de type multi-accès basé sur le principe connu d'une collision non destructive avec retenue de bit.

Ce circuit gère non seulement la transmission et la réception de messages mais aussi la détection d'erreurs.

En général le module gestionnaire de protocole 1 exécute les tâches suivantes:
- mise en forme des bits reçus ou transmis ;
- codage et décodage des bits ;
- génération des horloges de transmission ;
- traitement et reconnaissance du préambule ;
- traitement et reconnaissance du début de la trame ;
- gestion des temps d'accès, etc.

Le module gestionnaire 1 est relié d'une part, à un microprocesseur ou à un microcontrôleur 4 via une interface 6 et un ensemble 5 de lignes de données, d'adresses et de contrôle, et d'autre part, à une ligne de communication 2 via un amplificateur de ligne 3. Il comporte généralement un module logique de contrôle d'émission/réception 16 émettant des signaux à destination de l'amplificateur de ligne 3 et à destination du microprocesseur via plusieurs modules, notamment une mémoire de stockage de messages 9 reçus sous le contrôle d'un processeur de bits reçus 13 et d'une interface de gestion de réception 11. Le module de contrôle 16 reçoit également des signaux issus d'une part, de la ligne de communication 2 via l'amplificateur de ligne 3 et un module logique de séquencement de bit, et d'autre part, du microprocesseur ou microcontrôleur 4 via l'interface 6, une mémoire de message à émettre 7 sous le contrôle d'une interface de gestion d'émission 10 et d'un processeur de bit d'émission 12. Le module gestionnaire de protocole 1 comprend également un module logique de gestion d'erreur 14, une unité d'horloge 15, et une mémoire vive 18 contenant des identificateurs et reliée, d'une part, à l'interface 6 et, d'autre part, à l'interface de réception 11. L'interface 6 avec le microprocesseur ou microcontrôleur 4 est également dotée d'une logique d'interruption 17 pouvant émettre un ordre d'interruption INT. Par ailleurs, on comprend aisément que dans un tel circuit, de nombreuses interactions existent entre ses différents modules et on prendra alors la mesure des avantages apportés par le procédé selon l'invention dès lors qu'il s'agit de vérifier la conformité de ce circuit à une norme.

Bien sûr, l'invention n'est pas limitée aux exemples qui viennent d'être décrits et de nombreux aménagements peuvent être apportés à ces exemples sans sortir du cadre de l'invention.

Ainsi, le procédé selon l'invention peut viser toute norme existant ou future dans tout domaine d'application où des protocoles de communication sont mis en oeuvre, et notamment en domotique. On peut ainsi appliquer le procédé selon l'invention à la certification de circuits selon les normes EIBUS, BATIBUS, MEDIABUS, D2B, I2C ou GHS. Dans le domaine de l'automobile, les normes J1850, CAN ou toute autre norme peuvent être visées par le procédé selon l'invention. Celui-ci peut être appliqué à tout type de cellule quelque soit le mode de description utilisé pour sa conception, que ce mode soit élémentaire ou évolué, par exemple de type VHDL.

## Revendications

1. Procédé pour vérifier la conformité à une norme prédéterminée d'une cellule (CM) représentative d'un circuit dédié à la gestion d'un protocole de communication, ladite cellule (CM) ayant été préalablement optimisée pour une application donnée, caractérisé en ce qu'il comprend :
- une première étape (I) pour dupliquer ladite cellule (CM) en vue de générer plusieurs cellules dupliquées (C1, C2,...,CN) identiques à ladite cellule (CM) ;
- une seconde étape (II) pour connecter lesdites cellules dupliquées (C1, C2,...,CN) à un bus de réseau (B) ;
- une troisième étape (III) pour configurer chaque cellule dupliquée connectée (C1, C2,...,CN) selon des définitions contenues dans ladite norme,de sorte que l'ensemble (30) desdites cellules configurées (SP, MA, SL, M/S) soit représentatif de conditions réelles de fonctionnement du circuit conçu ; et
- une quatrième étape (IV) pour appliquer sur le bus de réseau des signaux représentatifs de trames conformes à ladite norme et des signaux anormaux ou parasites, et pour recueillir en retour pour analyse les réponses respectives de chacune desdites cellules configurées.

2. Procédé selon la revendication 1, caractérisé en ce que ladite cellule (CM) représentative d'un circuit dédié à la gestion d'un protocole de communication a été préalablement obtenue par modification d'une cellule initiale (CO) décrite à un très haut niveau de description (VHDL).

3. Procédé selon l'une des revendication 1 ou 2, caractérisé en ce que pendant la troisième étape de configuration (III), les cellules dupliquées sont configurées soit en mode Esclave (SL, S/A), soit en mode Maitre(M), soit en mode Maitre/Esclave (M/S), chaque mode de configuration correspondant à un des états fonctionnels attendus dudit circuit.

4. Procédé selon l'une des revendications 1 à 3, caractérisé en ce que les signaux anormaux ou parasites comprennent des signaux aléatoires.

5. Système pour vérifier la conformité à une norme prédéterminée d'une cellule (CM) représentative d'un circuit dédié à la gestion d'un protocole de communication, ladite cellule (CM) ayant été préalablement optimisée pour une application donnée, mettant en oeuvre le procédé selon l'une des revendications précédentes, comprenant des moyens pour traiter des cellules représentatives de circuits, caractérisé en ce que ces moyens de traitement sont agencés pour dupliquer ladite cellule (CM) et générer plusieurs cellules (C1, C2,..,CN) dupliquées identiques à ladite cellule (CM), et comprennent des moyens pour connecter lesdites cellules dupliquées à un bus de réseau (B), des moyens pour configurer chaque cellule dupliquée (C1, C2,...,CN) selon des définitions contenues dans ladite norme de sorte que l'ensemble (30) desdites cellules configurées (SP, MA, SL, M/S) soit sensiblement représentatif de conditions réelles de fonctionnement du circuit à vérifier, et des moyens (S) pour générer des signaux sur le bus de réseau (B).

6. Système selon la revendication 5, caractérisé en ce que la cellule à vérifier (CM) a été préalablement obtenue par modification d'une cellule initiale (CO) décrite à un très haut niveau de description (VHDL).

7. Système selon l'une des revendications 5 ou 6, caractérisé en ce que le bus de réseau (B) est représentatif d'un bus numérique multiplexé.

8. Système selon l'une des revendications 5 à 7, caractérisé en ce qu'il est inclus au sein d'un système d'intégration comprenant en outre des moyens pour mettre en forme une cellule modifiée (CM) préalablement conçue, et des moyens pour intégrer selon une technologie prédéterminée la cellule vérifiée par le procédé selon les revendications précédentes en vue de la fabrication du circuit qu'elle représente.

9. Application du procédé selon l'une des revendications 1 à 4 et du système selon l'une des revendications 5 à 8, à la vérification de conformité à des normes de communication dans le domaine de l'automobile.

10. Application du procédé selon l'une des revendications 1 à 4 et du système selon l'une des revendications 5 à 8, à la vérification de conformité à des normes de communication dans le domaine de la domotique.

## Patentansprüche

1. Verfahren zum Überprüfen der Konformität einer eine Übertragungsprotokollverwaltungsschaltung darstellenden Zelle (CM) mit einer vorgegebenen Norm, wobei die Zelle (CM) vorab für eine gegebene Anwendung optimiert worden ist,
***gekennzeichnet durch :***
- einen ersten Schritt (I) des Duplizierens der Zelle (CM), um mehrere mit der Zelle (CM) identische duplizierte Zellen (C1, C2, ..., CN) zu erhalten;
- einen zweiten Schritt (II) des Anschließens der duplizierten Zellen (C1, C2, ..., CN) an einen Netzbus (B) ;
- einen dritten Schritt (III) des Konfigurierens einer jeden angeschlossenen duplizierten Zelle (C1, C2, ..., CN) gemäß in der Norm enthaltenen Definitionen, so daß die Gesamtheit (30) der konfigurierten Zellen (SP, MA, SL, M/S) reale Betriebsbedingungen der entworfenen Schaltung darstellt; und
- einen vierten Schritt (IV) des Anlegens an den Netzbus von Signalen, die der Norm konforme Muster darstellen, und von anomalen oder Störsignalen, und daraufhin Aufnehmen der jeweiligen Antworten einer jeden der konfigurierten Zellen zur Analyse.

2. Verfahren nach Anspruch 1,
dadurch gekennzeichnet,
daß die eine Übertragungsprotokollverwaltungsschaltung darstellende Zelle (CM) vorab durch Abwandeln einer auf sehr hohem Niveau (VHDL) beschriebenen Ursprungszelle (CO) erhalten worden ist.

3. Verfahren nach einem der Ansprüche 1 oder 2,
dadurch gekennzeichnet,
daß während des dritten Schritts des Konfigurierens (III) die duplizierten Zellen im Slave-Modus (SL, S/A), Master-Modus (M) oder im Master/Slave-Modus (M/S) konfiguriert werden, wobei jeder Konfigurations-Modus einem der erwarteten Betriebszustände der Schaltung entspricht.

4. Verfahren nach einem der Ansprüche 1 bis 3,
dadurch gekennzeichnet,
daß die anomalen oder Störsignale Zufallssignale umfassen.

5. Anordnung zum Überprüfen der Konformität einer eine Übertragungsprotokollverwaltungsschaltung darstellenden Zelle (CM) mit einer vorgegebenen Norm, wobei die Zelle (CM) vorab für eine gegebene Anwendung optimiert worden ist, unter Anwendung des Verfahrens nach einem der vorhergehenden Ansprüche, mit Bearbeitungsmitteln für die die Schaltungen darstellenden Zellen,
dadurch gekennzeichnet,
daß die Bearbeitungsmittel eingerichtet sind, um die Zelle (CM) zu duplizieren und mehrere, mit der Zelle (CM) identische duplizierte Zellen (C1, C2, ..., CN) zu erzeugen und Mittel zum Anschließen der duplizierten Zellen an einen Netzbus (B), Mittel zum Konfigurieren einer jeden duplizierten Zelle (C1, C2, ..., CN) gemäß in der Norm enthaltenen Definitionen, so daß die Gesamtheit (30) der konfigurierten Zellen (SP, MA, SL, M/S) im wesentlichen reale Betriebsbedingungen der zu überprüfenden Schaltung darstellt, und Mittel zum Erzeugen von Signalen auf dem Netzbus (B) umfassen.

6. Anordnung nach Anspruch 5,
dadurch gekennzeichnet,
daß die zu überprüfende Zelle (CM) vorab durch Modifizieren einer auf sehr hohem Niveau (VHDL) beschriebenen Ursprungszelle (CO) erhalten worden ist.

7. Anordnung nach einem der Ansprüche 5 oder 6,
dadurch gekennzeichnet,
daß der Netzbus (B) einen gemultiplexten Digitalbus darstellt.

8. Anordnung nach einem der Ansprüche 5 bis 7,
dadurch gekennzeichnet,
daß sie in einem Integrationssystem enthalten ist, das ferner Mittel zum Ausbilden einer vorab entworfenen modifizierten Zelle (CM) und Mittel zum Integrieren der nach dem Verfahren gemäß den vorhergehenden Ansprüchen überprüften Zelle nach einer vorgegebenen Technologie zum Zweck der Fertigung der durch sie dargestellten Schaltung umfaßt.

9. Anwendung des Verfahrens nach einem der Ansprüche 1 bis 4 und der Anordnung nach einem der Ansprüche 5 bis 8 zur Überprüfung der Konformität mit Übertragungsnormen auf dem Gebiet der Kraftfahrzeugtechnik.

10. Anwendung des Verfahrens nach einem der Ansprüche 1 bis 4 und der Anordnung nach einem der Ansprüche 5 bis 8 zur Überprüfung der Konformität mit Übertragungsnormen auf dem Gebiet der Haustechnik.

## Claims

1. A method for checking the conformity of a cell (CM) representative of a circuit dedicated to the management of a communication protocol to a predetermined standard, the said cell (CM) having previously been optimised for a given application,
**characterised in that** it comprises:
- a first stage (I) for duplicating the said cell (CM) with a view to generating several duplicated cells (C1, C2, ..., CN) identical with the said cell (CM);
- a second stage (II) for connecting the said duplicated cells (C1, C2, ..., CN) to a network bus (B),
- a third stage (III) for configuring each connected duplicated cell (C1, C2, ..., CN) according to definitions contained in the said standard, so that the unit (30) of the said configured cells (SP, MA, SL, M/S) are representative of real operating conditions of the designed circuit; and
- a fourth stage (IV) for applying signals representative of fields in conformity with the said standard and abnormal or spurious signals to the network bus, and for collecting in return the respective replies of each of the configured cells for analysis.

2. A method according to Claim 1,
**characterised in that** the said cell (CM) representative of a circuit dedicated to the management of a communication protocol has previously been obtained by modifying an initial cell (CO) described to a very high description level (VHDL).

3. A method according to one of Claims 1 or 2,
**characterised in that** during the third configuration stage (III) the duplicated cells are configured either in slave mode (SL, S/A), or in master mode (M) or in master/slave mode (M/S), each configuration mode corresponding to one of the expected operational states of the said circuit.

4. A method according to one of Claims 1 to 3,
**characterised in that** the abnormal or spurious signals include random signals.

5. A system for checking the conformity of a cell (CM) representative of a circuit dedicated to the management of a communication protocol to a predetermined standard, the said cell (CM) having previously been optimised for a given application, using the method according to one of the preceding claims, comprising means for processing cells representative of circuits,
**characterised in that** these processing means are designed to duplicate the said cell (CM) and to generate several duplicated cells (C1, C2, .., CN) identical with the said cell (CM), and comprise means for connecting the said duplicated cells to a network bus (B), means for configuring each duplicated cell (C1, C2, ..., CN) according to definitions contained in the said standard so that the unit (30) of the said configured cells (SP, MA, SL, M/S) is substantially representative of real operating conditions of the circuit to be checked, and means (S) for generating signals on the network bus (B).

6. A system according to Claim 5,
**characterised in that** the cell to be checked (CM) has previously been obtained by modifying an initial cell (CO) described to a very high description level (VHDL).

7. A system according to one of Claims 5 or 6,
**characterised in that** the network bus (B) is representative of a numerical multiplexed bus.

8. A system according to one of Claims 5 to 7,
**characterised in that** it is included within an integration system also comprising means for formatting a previously designed modified cell (CM), and means for integrating according to a predetermined technology the checked cell by the method according to the preceding claims with a view to the production of the circuit which it represents.

9. Application of the method according to one of Claims 1 to 4 and of the system according to one of Claims 5 to 8 to the verification of conformity to communication standards in the field of motor vehicles.

10. Application of the method according to one of Claims 1 to 4 and of the system according to one of Claims 5 to 8 to the verification of conformity to communication standards in the field of domotics.
